# EUROPÄISCHE PATENTSCHRIFT

(11) **EP 3 272 697 B1**
(45) Veröffentlichungstag und Bekanntmachung des Hinweises auf die Patenterteilung: **22.03.2023**
(21) Anmeldenummer: 17176021.8
(22) Anmeldetag: 14.06.2017
(51) Int. Cl.: B66F 9/06, B66F 9/07, B66F 9/10, B65G 1/04, B66F 9/14, B65G 1/06

(54) **REGALBEDIENGERÄT FÜR EIN PALETTENSPEICHERSYSTEM**
SHELVING DEVICE FOR A PALETTE STORAGE SHELF
APPAREIL D'UTILISATION D'ÉTAGÈRE POUR UN SYSTÈME DE STOCKAGE DE PALETTES

(30) Priorität: 21.07.2016 DE 102016009000
(43) Veröffentlichungstag der Anmeldung: 24.01.2018
(73) Patentinhaber: Liebherr-Verzahntechnik GmbH, 87437 Kempten (DE)
(72) Erfinder: Mattern, Thomas, 87669 Rieden am Forgensee (DE); Zollitsch, Markus, 87490 Haldenwang (DE)
(74) Vertreter: Laufhütte, Dieter

(56) Entgegenhaltungen:
- DE-A1- 4 404 308
- DE-C1- 19 503 199
- JP-A- H11 334 869
- JP-A- 2003 226 405
- JP-A- 2013 006 632

## Beschreibung

Die Erfindung betrifft ein Regalbediengerät für ein Palettenspeichersystem mit wenigstens einem Regalsystem und mit wenigstens einer Bodenfahrschiene zum Verfahren des Regalbediengeräts gemäß dem Oberbegriff des Anspruchs 1.

Bei dem Palettenspeicher kann es sich um ein Palettenspeichersystem für Werkstücke auf Paletten, wie beispielsweise Europaletten, Maschinenpaletten, Werkstückbehälter, Gitterkästen oder Ähnliches handeln. Der Palettenspeicher kann dabei ein modular erweiterbares Regalsystem und zumindest eine modular erweiterbare Bodenfahrschiene bzw. Bodenführungsschiene und wenigstens ein auf der Bodenfahrschiene verfahrbares erfindungsgemäßes Regalbediengerät umfassen. Das Palettenspeichersystem kann mittels einer Sicherheitsumzäunung vor Betreten durch Maschinenbediener oder andere Personen geschützt werden, wodurch ein entsprechender Sicherheitsaspekt realisierbar ist.

Aus dem Stand der Technik bekannte Regalbediengeräte für Palettenspeichersysteme lassen es üblicherweise nicht zu, an allen Seiten des Regalbediengeräts Regale oder Werkzeugmaschinen mittels des Regalbediengeräts zu bedienen, das heißt zu be- oder entladen, und somit eine Rundumanordnung von Beladeplätzen oder Werkzeugmaschinen zu ermöglichen.

Die DE 195 03 199 C1 offenbart gemäß dem Oberbegriff des Anspruchs 1 eine Be- und Entladevorrichtung für palettierte Ladeeinheiten, welche einen auf einer Schiene verfahrbaren Verschiebewagen und ein darauf über einen Drehkranz drehbar verbundenes Linearführungssystem aufweist. In dem Linearführungssystem läuft ein Schlitten auf Rollen entlang einer horizontalen Achse in zwei Schienen des Linearführungssystems. Am Ende des Schlittens ist eine senkrecht stehende Linearführung angeordnet, in welcher eine Gabel zur Aufnahme bzw. Lagerung von palettierten Ladeeinheiten vertikal bewegbar gelagert ist.

Aus der JP 2013 006 632 A ist ein Regalbediengerät mit einem entlang eines Grundkörpers vertikal verschiebbaren Tisch bekannt, auf welchem ein mehrgliedriger Arm mit mehreren Linearführungen zum Aufnehmen und Handhaben von Transportgut gelagert ist.

Die JP H11 334 869 A offenbart ein Regalbediengerät mit einem entlang eines Grundkörpers vertikal verschiebbaren mehrgliedrigen Arm zum Aufnehmen und Handhaben von Transportgut.

Vor diesem Hintergrund ist es Aufgabe der Erfindung, eine Vorrichtung bereitzustellen, welche die Möglichkeit bietet, eine individuelle Beladung des Laderegals bzw. des Regalsystems sowie eine Maschinenbeladung bzw. eine Beladung von Werkzeugmaschinen oder eine Beladung einer Automationslösung derart durchzuführen, dass eine Rundumbeladung der entsprechenden Komponenten insbesondere von rechts und von links bzw. an wenigstens zwei Seiten des Regalbediengeräts und insbesondere in direkter Nähe zum Regalbediengerät sowie an Querseiten von Bodenfahrschienen entsprechender Palettenspeichersysteme möglich ist. Bevorzugt soll ferner ein Regalbediengerät bereitgestellt werden, welches aufgrund eines einfachen Ölmanagements eine kostengünstigere Ausgestaltung des gesamten Palettenspeichersystems ermöglicht.

Diese Aufgabe wird erfindungsgemäß durch ein Regalbediengerät mit den Merkmalen des Anspruchs 1 gelöst. Vorteilhafte Ausbildungen sind Gegenstand der Unteransprüche. Demnach ist ein Regalbediengerät für ein Palettenspeichersystem mit wenigstens einem Regalsystem und mit wenigstens einer Bodenfahrschiene zum Verfahren des Regalbediengeräts vorgesehen, wobei das Regalbediengerät einen Grundkörper, wenigstens eine an dem Grundkörper des Regalbediengeräts außenliegend über wenigstens eine Vertikalführung gekoppelte Linearführung und wenigstens einen an der Linearführung zum Aufnehmen, Entnehmen und/oder Halten von Transportgut vorgesehenen Fahrwagen umfasst, wobei der Grundkörper um insbesondere 360° um die vertikale Achse drehbar angeordnet ist. Erfindungsgemäß ist die Linearführung teleskopartig gebildet und an dem Grundkörper außenliegend über die Vertikalführung gekoppelt, sodass die Linearführung am Grundkörper tangential linear bewegbar ist.

Die Linearführung kann hierbei einen oder mehrere Teleskopzylinder umfassen, wobei der Begriff teleskopartig nicht einschränkend zu verstehen ist. Denkbar ist auch eine Ausführung als Schubkette oder als sonstiger Mechanismus, der ein teleskopartiges Funktionieren ermöglicht. Das Merkmal des Grundkörpers bezieht sich auf einen Komponente des Regalbediengeräts, welche die größte vertikale Erstreckung des Regalbediengeräts aufweisen kann und beispielsweise säulenförmig ausgestaltet sein kann. An dem Grundkörper ist eine Vertikalführung zum Verfahren der Linearführung in einer vertikalen Richtung bzw. entlang des Grundkörpers vorgesehen. Der Drehbereich des Grundkörpers kann auch abweichend von den oben genannten 360° mehr oder weniger als 360° sein. Mit der vertikalen Achse ist vorliegend eine Achse gemeint, die senkrecht zu dem Untergrund des Regalbediengeräts angeordnet ist, wobei Abweichungen von der Senkrechten ebenfalls denkbar sind.

In einer bevorzugten Ausführung ist dabei denkbar, dass das Regalbediengerät genau eine außenliegende Linearführung oder wenigstens zwei außenliegende Linearführungen umfasst und/oder genau einen Fahrwagen zum Aufnehmen, Entnehmen und/oder Halten von Transportgut oder wenigstens zwei Fahrwagen zum Aufnehmen, Entnehmen und/oder Halten von Transportgut umfasst.

Das Regalbediengerät dient zum Handhaben der Güter bzw. Transportgüter in dem Regalsystem bzw. in entsprechend entlang der Bodenfahrschiene angeordneten Werkzeugmaschinen oder sonstigen Geräten oder Beladestationen. Hierzu ist an der Linearführung wenigstens ein Fahrwagen zum Aufnehmen, Entnehmen und/oder Halten von Transportgut vorgesehen. Bei dem Regalbediengerät kann es sich um einen automatischen, dynamischen Roboter insbesondere in Form des genannten Regalbediengeräts handeln, welches insbesondere parallel zu den Beladestationen verfahrbar ist. Bei den Beladestationen kann es sich um die vorgenannten Regale, Werkzeugmaschinen oder spezielle Automationslösungen handeln, die auf bzw. an der Bodenfahrschiene angeordnet sind.

Es ist denkbar, dass der Roboter bzw. das Regalbediengerät als ein Einfachregalbediengerät mit wenigstens einer außenliegenden Linearführung ausgebildet ist. Dies bringt den Vorteil, dass eine sehr platzsparende Variante geschaffen werden kann, welche dabei eine optimale Be- und Entladung gewährleistet. Alternativ ist es denkbar, dass der Roboter als ein Doppelregalbediengerät mit wenigstens zwei außenliegenden teleskopartigen Linearführungen ausgebildet ist. Dies bietet den Vorteil, dass ein schneller Palettenwechsel bei geringer Baugrößenänderung realisierbar ist. Zudem weist das Regalbediengerät durch die außenliegende teleskopartige Linearführung eine große Reichweite auf. Dadurch kann ein ausreichender Platz für einen Maschinenbediener zwischen beispielsweise einer vom Palettenspeichersystem beladenen Werkzeugmaschine und dem Palettenspeichersystem selbst freigehalten werden kann. Es ist somit möglich, während des Betriebs des Palettenspeichersystems eine beispielsweise beim Umrüsten einer Werkzeugmaschine auftretende Störung, Wartung etc. durchzuführen, ohne das gesamte System zu stoppen. Das hierfür notwendige Personal kann den ausreichenden Platz zwischen Maschine und Palettenspeichersystem für einen benötigten Zugang nutzen.

In einer besonders bevorzugten Ausführung ist denkbar, dass zwei außenliegende Linearführungen insbesondere um 90° zueinander angewinkelt angeordnet sind und/oder dass zwei Fahrwagen zum Aufnehmen, Entnehmen und/oder Halten von Transportgut insbesondere um 90° zueinander angewinkelt sind. Die Fahrwagen können hierbei an insbesondere je einer Linearführung verfahrbar angeordnet sein. Eine entsprechende angewinkelte Anordnung erleichtert dabei einen schnellen Palettenwechsel, bei dem zunächst eine Palette durch die erste Linearführung bzw. den ersten Fahrwagen aus dem Regalsystem entnommen wird und eine andere, auf der zweiten Linearführung bzw. dem zweiten Fahrwagen bereitgestellte, Palette in den freigewordenen Platz des Regalsystems eingeschoben wird.

In einer weiteren bevorzugten Ausführung kann vorgesehen sein, dass das Regalbediengerät eine insbesondere breitenverstellbare Palettenaufnahme zum Heben unterschiedlich breiter Paletten umfasst. Alternativ oder zusätzlich umfasst das Regalbediengerät (1, 11) ein Schnellwechselsystem, zum Ankuppeln zumindest einer weiteren Ausführung einer Palettenaufnahme. Es ist denkbar, dass die Palettenaufnahme derart ausgebildet ist, dass während der Handhabung von Werkstücken auf Paletten etc. die Palettenaufnahme in der Breite verstellt werden kann, sodass hiermit entsprechend auch unterschiedlich breite Paletten und somit unterschiedliche breite Regalfächer gehandhabt bzw. bedient werden können. Das bietet den Vorteil, dass eine Variation und optimale Anpassung an Lagerbedingungen realisiert werden kann.

Das Schnellwechselsystem weist hierbei eine Ankuppelaufnahme zur Aufnahme von weiteren Ausführungen einer Palettenaufnahme, insbesondere eine Gabel zum Handhaben von Maschinen- oder Europaletten. Es ist denkbar, eine vordefinierte Schnittstelle an dem Regalbediengerät vorzusehen, mittels derer ein automatisierter Gabelwechsel durchführbar ist. Bei der automatisierten Lösung ist ein Verriegelungsmechanismus an dem Wechselsystem vorzusehen, welcher beispielsweise als ein Verriegelungskolben, Verriegelungsring oder Verriegelungskugeln ausgestaltet ist. Ein Schnellwechselsystem bietet den Vorteil, eine gesteigerte Flexibilität des Systems hinsichtlich der Handhabungsanforderungen zu erreichen.

In allen Ausführungsformen kann dabei das gleiche Grundgerät vorliegen.

In einer weiteren bevorzugten Ausführung ist denkbar, dass das durch die Linearführung an dem Außenbereich eine Grundkörpers des Regalbediengeräts vom Regalbediengerät transportierte bzw. gehaltene Transportgut unmittelbar an dem Grundkörper bzw. unter minimalem Abstand von dem Grundkörper vom Regalbediengerät gehalten werden kann. Durch den minimierten Abstand zwischen der Säule oder dem Grundkörper bzw. dem Regalbediengerät auf der einen Seite und dem Transportgut auf der anderen Seite ist es vorteilhaft möglich, ein Regalbediengerät bereitzustellen, welches insbesondere im beladenen Zustand besonders wenig Raum innerhalb eines Palettenspeichersystems einnimmt.

In einer weiteren bevorzugten Ausführung kann ferner vorgesehen sein, dass das Regalbediengerät auf einem Schlitten entlang der Bodenfahrschiene verfahrbar ist und/oder in einer horizontalen Ebene und/oder Richtung entlang Bodenfahrschiene verfahrbar ist.

Ferner ist denkbar, dass an dem Regalbediengerät eine Ölauffangwanne insbesondere unterhalb mindestens einem der Fahrwagen schwenkbar und koppelbar angeordnet ist und/oder dass die Ölwanne in einem unteren Bereich des Regalbediengeräts vorgesehen ist und/oder dass die Ölwanne in wenigstens einer insbesondere horizontalen Richtung flexibel und/oder relativ zum Regalbediengerät verfahrbar, verformbar und/oder einfahrbar ist.

Vorteilhaft ist an einer entsprechenden Ölwanne, dass keine Ölschutzvorrichtung wie beispielsweise öldichte Bodenfahrschienen notwendig sind und gleichzeitig die Ölversorgung bzw. Ölentsorgung des Regalbediengeräts gewährleistet werden kann.

Die Entleerung der Ölauffangwanne kann mittels einer hierfür vorgesehenen Ölpumpe realisiert werden, welche das Öl aus dem Behältnis bzw. der Ölauffangwanne herauspumpt.

Durch eine entsprechend verformbare, verfahrbare oder einfahrbare Ölauffangwanne kann diese Hindernissen auf der Verfahrstrecke des Regalbediengeräts ausweichen, wodurch das Regalbediengerät näher an Hindernissen vorbeibewegt werden kann. Dies hängt damit zusammen, dass die Ölauffangwanne in Teilen des Regalbediengeräts dessen äußerste Kontur sein kann und daher besonders kollisionsgefährdet ist, wenn Hindernisse oder sonstige Objekte in der Nähe des Verfahrweges des Regalbediengeräts vorliegen. Die Ölwanne kann entsprechend in dieser Ebene oder annähernd in dieser Ebene wie oben beschrieben verstellt bzw. verformt werden und hierdurch Hindernissen ausweichen. Mit der horizontalen Richtung ist die allgemeine Bewegungsrichtung des Regalbediengeräts gemeint, welche jedoch nicht genau horizontal sein muss.

In einer möglichen Ausführungsform der vorliegenden Erfindung ist ein Energiespeicher bevorzugt auswechselbar vorgesehen. Insbesondere kann das Regalbediengerät so ausgeführt sein, dass ein entladener Energiespeicher durch einen geladenen Energiespeicher ausgetauscht werden kann. Bevorzugt kann der Austausch erfolgen, ohne dass das Regalbediengerät mechanisch gelöst werden müsste.

Durch den Wechsel des Energiespeichers kann in einer möglichen Ausführungsform auf ein Aufladen des Energiespeichers über eine Energieversorgungseinrichtung des Regalbediengerätes verzichtet werden. Alternativ kann die Auswechselbarkeit zusätzlich zur Wiederaufladbarkeit des Energiespeichers am Wagen gegeben sein. Bevorzugt weist das Regalbediengerät eine Wechselstation zum manuellen und/oder automatischen Auswechseln des Energiespeichers auf. Die Wechselstation ermöglicht bevorzugt einen Zugang zum Regalbediengerät ein manuelles Wechseln und/oder weist eine Automation auf, welche den Energiespeicher aus dem Regalbediengerät entnimmt und durch einen anderen Energiespeicher ersetzt. Bevorzugt weist die Wechselstation eine Ladevorrichtung zum Aufladen eines oder mehrerer Energiespeicher auf.

Die Erfindung ist ferner auf ein Palettenspeichersystem nach Anspruch 10 gerichtet, mit wenigstens einem Regalsystem, wenigstens einem Regalbediengerät nach einem der Ansprüche 1 bis 9 und wenigstens einer Bodenfahrschiene zum Verfahren des Regalbediengeräts.

Bei dem Palettenspeichersystem bzw. bei dem Lagersystem kann es sich um ein vollautomatisiertes Lagersystem handeln, welches mittels von Regal- und Bodenfahrschienensegmenten einen modularen Aufbau des Systems ermöglicht und gleichzeitig unterschiedliche Belademöglichkeiten, wie insbesondere eine stirnseitige Beladung beispielsweise der Regalelemente und eine direkte Maschinenbeladung von entlang der Bodenfahrschienen angeordneten Maschinen bzw. Werkzeugmaschinen ermöglicht. Mit stirnseitiger Beladung ist hierbei die Beladung in den Endbereichen der Bodenfahrschiene gemeint. Die außenliegende Linearführung des Regalbediengeräts kann dabei an einer sich vertikal erstreckenden Säule bzw. am Grundkörper des Regalbediengeräts tangential bzw. entlang der Außenkontur der Säule linear zum Be- und Entladen von Regalstellplätzen bzw. von Werkzeugmaschinen bewegt werden. Durch die Anordnung der entsprechenden Linearführung an der Außenseite des Regalbediengeräts ist es möglich, von dem Regalbediengerät gegriffene Paletten bzw. Transportgüter sehr nahe an die vertikale Säule heranzuführen, wodurch sich eine besonders geringe seitliche Erstreckung des Regalbediengeräts mit gegriffenem Transportgut ergibt. Dadurch kann die Bodenfahrschiene zum Verfahren des Regalbediengeräts besonders nah an den Regalelementen des Regalsystems verlegt werden und es können stirnseitige Bereiche der Bodenfahrschiene bzw. des Palettenspeichersystems zum Speichern von Paletten oder Bearbeiten von Werkstücken mittels von dort positionierbaren und mittels des Regalbediengeräts bedienbaren Werkzeugmaschinen genutzt werden, wodurch eine besonders platzsparende Anordnung des gesamten Palettenspeichersystems möglich ist.

Es ist denkbar, dass das Regalsystem mittels Befestigungselementen direkt mit einem Untergrund koppelbar ist. Bei dem Untergrund kann es sich üblicherweise um einen Hallenboden der Halle handeln, in welcher das Palettenspeichersystem verwendet wird. Der Untergrund selbst muss dabei kein Teil des Erfindungsgegenstands sein. Die Befestigungselemente können als Schienen und/oder Konsolen ausgebildet sein, welche mit dem Untergrund beispielsweise verschraubbar sind und auf welchen ein einzelnes oder auch mehrere Elemente des Regalsystems positionierbar und beispielsweise damit verschraubbar sind. Es ist denkbar die Elemente des Regalsystems und die einzelnen Elemente bzw. Module der Bodenfahrschiene mittels der gleichen Befestigungselemente mit dem Untergrund zu koppeln. Denkbar ist auch, dass mit einem einzelnen Befestigungselement sowohl wenigstens ein Modul des Regalsystems als auch wenigstens ein Modul der Bodenfahrschiene mit dem Untergrund koppelbar ist.

Besonders bevorzugt kann hierbei vorgesehen sein, dass die wenigstens eine Bodenfahrschiene aus insbesondere baugleichen, miteinander verbindbaren Modulen aufgebaut ist, und/oder dass das wenigstens eine Regalsystem aus insbesondere baugleichen, miteinander verbindbaren Modulen aufgebaut ist. Die modular aufgebaute Bodenfahrschiene bzw. das modular aufgebaut Regalsystem kann damit besonders einfach hergestellt, transportiert und in einer gewünschten Form montiert werden.

Die Bodenfahrschiene kann parallel zum Regalsystem bzw. zu den Modulen des Regalsystems angeordnet werden, wobei auf der dem Regalsystem gegenüberliegenden Seite der Bodenfahrschiene und an den Kopfenden bzw. Querseiten der Bodenfahrschiene beispielsweise Werkzeugmaschinen und/oder weitere Module des Regalsystems anordenbar sind. Die Bodenfahrschiene ermöglicht das Verfahren des Regalbediengeräts, wobei sie vorteilhafterweise aus einzelnen Segmenten bzw. Modulen besteht, die mittels Verbindungselementen miteinander verbindbar sind. Hierdurch kann vorteilhafterweise die Größe der Bodenfahrschienen auf die zum Transportieren der Elemente beschränkende LKW-Größe angepasst werden, wobei gleichzeitig je nach Anforderungen und Gegebenheiten die Größe der für den Einsatz zusammengebauten Bodenfahrschiene variiert werden kann, sodass einfach eine flexible Länge und somit Größe des gesamten Systems erzielt werden kann. Die Module der Bodenfahrschiene sind derart ausgebildet, dass keine zusätzlichen Anordnungen bzw. Einrichtungen an diesen vorgesehen werden müssen. Insbesondere müssen keine Ölabdeckungen bereitgestellt werden, wodurch die Bodenfahrschiene insgesamt kostengünstiger herstellbar ist. Es kann das Prinzip einer Baukastenform mit vordefinierten Modulabmessungen genutzt werden, wobei die einzelnen Bodenfahrschienensegmente bzw. -module in vordefinierten Abmessungen beispielsweise zwischen einem Meter und zehn Metern herstellbar sind. Die Module können einen Schienenabschnitt und einen Bodenabschnitt umfassen, wobei die Schienenabschnitte mit den Bodenabschnitten gekoppelt sind. Zum Montieren oder Erweitern eines erfindungsgemäß vorgesehenen Abschnitts einer Bodenfahrschiene muss lediglich der Bodenabschnitt eines Moduls mit einem Untergrund und/oder mit einem weiteren Modul verbunden werden. Die am Bodenabschnitt angeordneten Schienenabschnitte bzw. der entsprechende Schienenabschnitt sind dann zum Verfahren eines Regalbediengeräts eingerichtet und bereit. Die Module können ferner als Module mit geraden oder gekrümmten Schienenabschnitten ausgebildet sein, wodurch entsprechende gerade oder gekrümmte Abschnitte der Bodenfahrschiene darstellbar bzw. herstellbar sind.

In einer weiteren bevorzugten Ausführung ist denkbar, dass der von dem Regalbediengerät erreichbare Bereich sowohl die Längsseiten als auch die Querseiten der Bodenfahrschiene umfasst, wobei insbesondere an wenigstens einer Querseite der Bodenfahrschiene Teile des Regalsystems und/oder sonstige von dem Regalbediengerät zu erreichenden Komponenten angeordnet sind.

Hierdurch ist eine Rundumanordnung von Komponenten des Palettenspeichersystems um dessen Bodenfahrschiene möglich, wodurch ein besonders platzsparendes Palettenspeichersystem bereitstellbar ist. Unter Komponenten des Palettenspeichersystems können Teile von dessen Regalsystem und/oder Werkzeugmaschinen bzw. Beladestationen oder Automationslösungen verstanden werden, die von dem Regalbediengerät bedient werden können. Als von dem Regalbediengerät erreichbarer Bereich ist dabei jeder Bereich anzusehen, zum dem das Regalbediengerät Paletten bringen oder von dem es Paletten abholen kann. Die Querseite der Bodenfahrschiene bezeichnet vorliegend den Bereich einer Schiene, der deren End- oder Anfangsbereich entspricht, und in dem gemäß dem Stand der Technik keine Beladestationen, Automationslösungen oder ähnliches vom Regalbediengerät erreichbar sind.

In einer weiteren bevorzugen Ausführung ist ferner denkbar, dass zwischen einem Bewegungsbereich des Regalbediengeräts und weiteren Komponenten des Palettenspeichersystem wie insbesondere Werkzeugmaschinen oder anderen Automationslösungen eine Absperrung zum sicheren Trennen des Bewegungsbereiches des Regalbediengerätes von den jeweiligen Komponente des Palettenspeichersystems vorsehbar ist, und/oder dass zwischen der Bodenfahrschiene und wenigstens einer Komponente des Palettenspeichersystems ein Frontzugang für Bedienpersonen vorgesehen ist.

Die Absperrung kann hierbei dazu ausgelegt sein, Personen keinen Zugang zur Bodenfahrschiene zu ermöglichen und/oder umgekehrt dazu ausgelegt sein, außerhalb der Bodenfahrschiene befindliche Personen vor Teilen des Palettenspeichersystems oder vor dessen Inhalt zu schützen. Die Absperrung kann beispielsweise Zaunelemente umfassen, die insbesondere bewegbar gelagert sind und bei Bedarf zwischen die Bodenfahrschiene und die entsprechende Komponente bewegt werden können. Erfindungsgemäß kann zwischen der Bodenfahrschiene und der jeweiligen Komponente aufgrund der hinreichend weit ausfahrbaren Linearführung genügend Platz für die entsprechende Absperrung und/oder für das Durchführen von beispielsweise Wartung- und/oder Rüstarbeiten an der von der Schiene abgesperrten Komponente bereitgestellt werden. Der Frontzugang kann beispielsweise durch Bedienpersonen zum Einstellen der entsprechenden Werkzeugmaschine bzw. Komponente und/oder zum Durchführen von Wartungsarbeiten an dem Regalbediengerät genutzt werden.

In einer weiteren bevorzugten Ausführung kann ferner vorgesehen sein, dass das Regalsystem des Palettenspeichersystems wenigstens ein angetriebenes rotationssymmetrisches Regal umfasst. Der Einsatz eines derartigen Regals bietet nicht nur eine einfache Erweiterungsmöglichkeit und damit verbundenen Speicherkapazitätserweiterung sondern ebenfalls eine gesteigerte Flexibilität des Systems. Es ist vorstellbar eine Kombination des Regalsystems mit Verbindung des angetriebenen rotationssymmetrischen Regals zu schaffen, da die Anzahl der jeweiligen Regale ohne Beschränkung an die gegebenen Anforderungen anpassbar ist. Zudem ist eine nachträgliche Erweiterung des Speichervolumens denkbar. Das hier einzusetzende angetriebene rotationssymmetrische Regal weist ein Übergabeplatz zu dem Regalbediengerät hin auf.

Weitere Einzelheiten und Vorteile der Erfindung sind anhand der in den Figuren beispielhaft gezeigten Ausführungen erläutert. Dabei zeigen:
- Figur 1:: erfindungsgemäßes Regalbediengerät;
- Figur 2:: Einfädelmanöver eines erfindungsgemäßen Regalbediengeräts in ein Regalsystem;
- Figur 3:: erfindungsgemäßes Regalbediengerät als Doppelregalbediengerät;
- Figur 4:: erfindungsgemäßes Regalbediengerät innerhalb eines Palettenspeichersystems; und
- Figur 5:: erfindungsgemäßes Palettenspeichersystem.

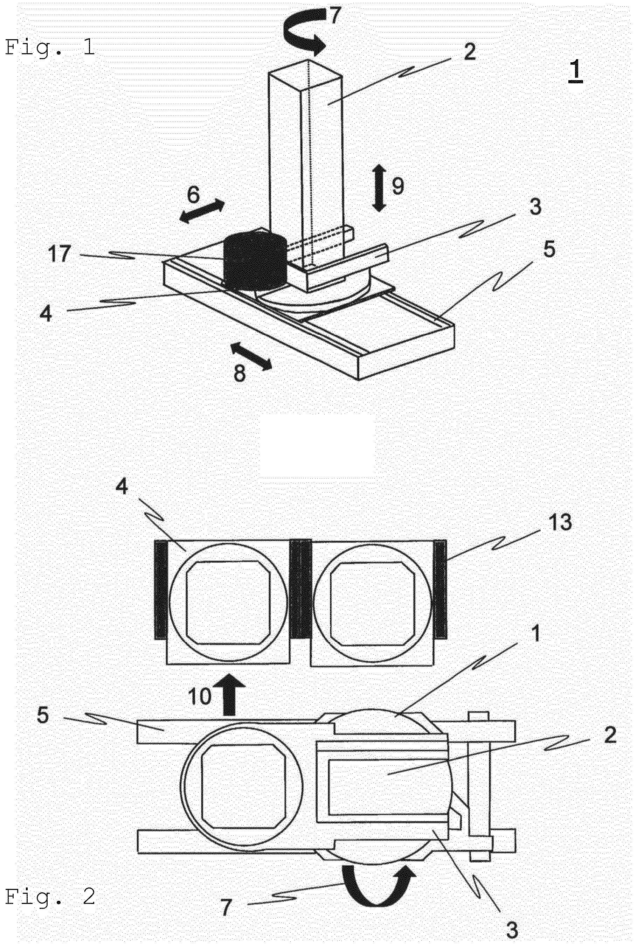

Figur 1 zeigt ein erfindungsgemäßes Einfachregalbediengerät 1 zum Bedienen eines in den weiteren Figuren gezeigten Regalsystems 13 mit entsprechenden Regalfächern 14. Das Regalbediengerät 1 umfasst eine außenliegende teleskopartige Linearführung 3, welche außen an einem Grundkörper 2 bzw. einer Säule 2 angeordnet ist. Der Grundkörper 2 kann dabei insbesondere als starr ausgestaltete Säule 2 ausgebildet sein. Die Linearführung 3 ist mit einem Fahrwagen 4 gekoppelt, mittels dem Transportgut bzw. Lagergut 17 gehandhabt werden kann. Das Regalbediengerät 1 kann entlang einer insbesondere modular aufgebauten und am Boden vorgesehenen Bodenfahrschiene 5 verfahren werden. Mittels der Linearführung 3 kann das Werkstück 17 bzw. das Transportgut 17 in einer Linearbewegung 6 im Wesentlichen senkrecht zum Grundkörper 2 bewegt werden. Der Grundkörper 2 kann auf einem Schlitten entlang der Bodenfahrschiene 5 verfahren werden und relativ zu dem Schlitten in einer Drehbewegung um eine vertikale Achse gedreht werden. Der Begriff des Schlittens ist hierbei weit zu verstehen und umfasst alle Vorrichtungen zum Verfahren eines Gegenstands entlang einer Schiene bzw. entlang einer Bodenfahrschiene. Die Bewegung entlang der Bodenfahrschiene 5 kann dabei als Verfahrbewegung in X-Richtung 8 und die Bewegung der Linearführung 3 und des Fahrwagens 4 in einer vertikalen Richtung entlang des Grundkörpers 2 als Vertikalbewegung 9 bezeichnet werden.

Zur Ausführung der entsprechenden Bewegungen des Regalbediengerätes 1 kann ein mit dem Grundkörper 2 vertikal verfahrbar gekoppelter Vertikalfahrschlitten vorgesehen sein, der als Teil der Linearführung 3 ausgebildet sein kann und/oder mit dieser gekoppelt sein kann. Der Vertikalfahrschlitten stellt hierbei eine Vertikalführung für die Linearführung dar. Relativ zu dem Vertikalfahrschlitten können insbesondere außen daran vorgesehene Teile der Linearführung 3 relativ zum Vertikalfahrschlitten und weg vom Grundkörper 2 zum Bewegen des Transportguts 17 verfahren bzw. bewegt werden.

Wie in Figur 1 erkennbar ist, kann das Transportgut 17 durch die besondere Ausgestaltung der Linearführung 3 mit dem Grundkörper 2 des Einfachregalbediengeräts 1 in Kontakt oder nahezu in Kontakt gebracht werden.

Durch die Anordnung der Linearführung 3 an den Außenbereichen des Grundkörpers 2 ist es möglich das Regalbediengerät 1 so zu auszuführen, dass zwischen Transportgut 17 und Grundkörper 2 keine oder nahezu keine Strukturen des Regalbediengeräts 1 vorliegen und das Transportgut 17 daher besonders nahe an den Grundkörper 2 verfahrbar ist. Daraus ergibt sich eine besonders geringe Außenabmessung des mit dem Transportgut 17 beladenen Einfachregalbediengeräts 1, was u.a. den Vorteil einer besonders platzsparenden Anordnung eines mit einem entsprechenden Regalbediengeräts 1 ausgestatteten Palettenspeichers ermöglicht.

Figur 2 zeigt ein Einfädelmanöver 10 des Regalbediengeräts 1 in das Regalsystem 13. Hierbei kann das Regalbediengerät 1 entlang der Bodenfahrschiene 5 verfahren werden, während der Grundkörper 2 um eine vertikale Achse dreht und die Linearführung 3 das Transportgut 17 vom Grundkörper 2 weg bewegt. Ferner ist dabei das durchführen einer Vertikalbewegung 9 des Transportguts 17 durchführbar. Die Drehbewegung 7 des Grundkörpers 2 bzw. der Linearführung 3 und die weiteren Bewegungen der Vorrichtung können hierbei gleichzeitig oder zeitlich versetzt durchgeführt werden, sodass die Struktur des Regalbediengeräts 1 nicht mit dem Regalbediensystem 13, dem Regalfach 14 oder weiteren benachbarten Strukturen kollidiert.

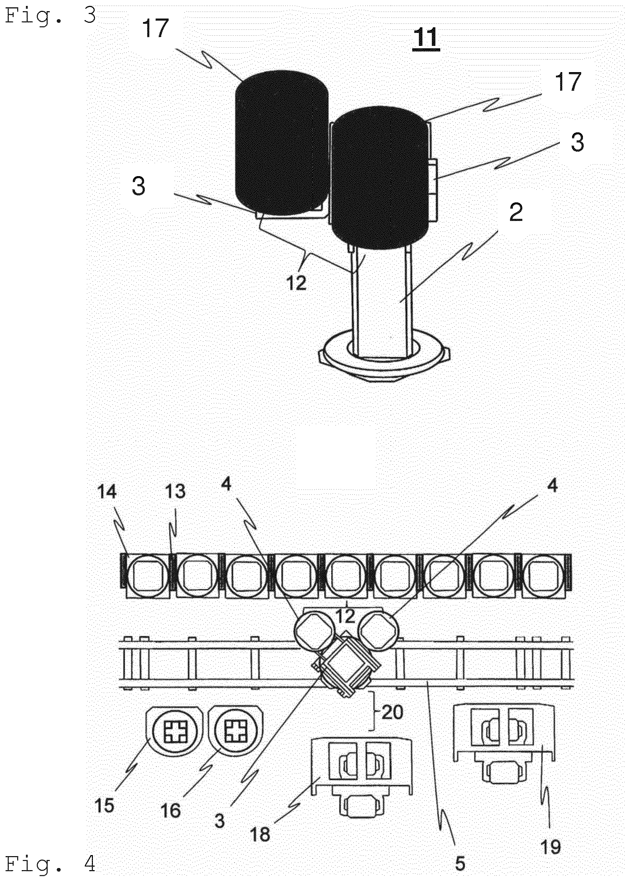

Figur 3 zeigt erfindungsgemäßes Regalbediengerät in einer Ausführung als Doppelregalbediengerät 11. Dabei können zwei außenliegende Linearführungen 3 in einem Versatz 12 von insbesondere 90° zueinander versetzt an einem Grundkörper 2 angeordnet sein. Hierdurch ist es möglich, gleichzeitig zwei Werkstücke 17 bzw. Transportgüter 17 mittels des Regalbediengeräts 11 zu manipulieren. Vorteilhafterweise ist es so möglich, einen belegten Regalplatz 14 bzw. ein belegtes Regalfach 14 mittels des Doppelregalbediengeräts 11 zu leeren und im darauf folgenden Arbeitsschritt mit einem von dem Doppelregalbediengerät 11 gehaltenen zweiten Transportgut 17 zu beladen. Das Doppelregalbediengerät 11 muss daher nicht erst umständlich ein in einem Regalfach 14 gelagertes Objekt entnehmen und zu einem zum Regalfach 14 beabstandeten Zwischenlagerplatz verfahren um dann mit der so freigemachten Linearführung 3 ein einzulagerndes Werkstück 17 von einem weiteren Lagerplatz abzuholen und in das freigemachte Regalfach 14 einzulagern. Durch die Ausbildung des Regalbediengerätes als Doppelregalbediengerät 11 kann so der Lagervorgang beschleunigt werden.

In Figur 4 ist eine mögliche Ausgestaltung des Palettenspeichersystems gezeigt, bei dem das Regalbediengerät als Doppelregalbediengerät 11 mit zwei außenliegend angeordneten Linearführungen 3 ausgebildet ist. An einer Seite einer Bodenfahrschiene 5 kann dabei ein Regalsystem 13 mit entsprechenden Regalfächern 14 vorgesehen sein, die vom Doppelregalbediengerät 11 be- und entladbar sind. Auf der dem Regalsystem 13 gegenüberliegenden Seite 5 können weitere Einrichtungen wie Rüstplätze 15, 16 Werkzeugmaschinen 18, 19 oder auch weitere Teile des Regalsystems 13 vorgesehen sein. Durch die kompakte Ausführung des Regalbediengeräts 1, 11 ist es auch möglich Regalfächer 14 an den Stirnseiten der Bodenfahrschiene 5 vorzusehen. Durch die entsprechend weit ausfahrbar ausgebildete Linearführung 3 ist es möglich, beispielsweise die erste Werkzeugmaschine 18 so weit von der Bodenfahrschiene 5 beabstandet anzuordnen, dass zwischen der Bodenfahrschiene 5 und der ersten Werkzeugmaschine 18 ein Frontzugang 20 zur Maschine bereitgestellt werden kann. Dieser kann beispielsweise durch Bedienpersonen zum Einstellen der entsprechenden Werkzeugmaschine 18 und/oder zum Durchführen von Wartungsarbeiten an dem Regalbediengerät 1, 11 genutzt werden.

Gegenstand der Erfindung ist somit ein automatischer, dynamischer Roboter insbesondere in Form des geschilderten Regalbediengerätes, welcher insbesondere innerhalb der oder parallel zu den Beladestationen, wie beispielsweise einem Regalsystem, Werkzeugmaschinen oder speziellen Automationslösungen auf den Bodenfahrschienen verfahrbar ist. Das Regalbediengerät dient zur Ein- und Auslagerung von Lasten, wie Werkstücke auf Paletten, wie beispielsweise Europaletten, Maschinenpaletten, Werkstückbehältern etc. oder sonstigen Materialien.

Das Regalbediengerät weist einen über am Boden angeordnete Schienen verfahrbaren Grundkörper, außenliegende teleskopartige Führungen und einen Fahrwagen zur Auf- bzw. Entnahme von Lasten auf.

Es ist denkbar, dass der Roboter als ein Einfachregalbediengerät mit außenliegenden Linearführungen ausgebildet ist. Die Teleskopachse außen ist derart ausgestaltet, dass diese eine Linearbewegung zur Auf- bzw. Entnahme von Werkstücken auf Paletten, wie beispielsweise Europaletten, Maschinenpaletten, Werkstückbehälter etc. ermöglicht. Durch das Ausfahren und wieder Einfahren der außenliegenden Linearführungen ist es möglich eine platzsparende Ausgestaltung des Palettenspeichersystems zu realisieren. Durch die relativ geringe Baugröße des Regalbediengerätes ist ein drehen innerhalb des Systems möglich, wodurch eine Beladung stirnseitig rechts und links möglich ist. Der Grundkörper 2 ist als eine starr ausgestaltete Säule 2 ausgebildet an welcher der Fahrwagen 4 angebracht ist. Das Regal ist in der Lage in X-Richtung auf der am Boden vorgesehenen Bodenfahrschiene zu verfahren.

Die Figuren zeigten auf, dass eine platzsparende Bauweise möglich ist, da keine weite Entfernung zwischen dem Regalbediengerät und dem Regalsystem für Einfädelmanöver oder Wendemanöver notwendig ist. Das bietet den Vorteil, dass eine sehr platzsparende Variante geschaffen werden kann, welche jedoch eine optimale Be- bzw. Entladung gewährleistet.

Ebenfalls ist es denkbar, dass der Roboter als ein Doppelregalbediengerät mit außenliegenden teleskopartigen Linearführungen ausgebildet ist. Der Unterschied zu dem bereits oben erläuterten Ausführungsbeispiel besteht darin, dass zwei Fahrwägen vorgesehen sind. Die Anordnung ist vorzugweise im 90° Winkel angeordnet. Das bietet die Möglichkeit einen schnellen Palettenwechsel zu realisieren, wobei eine platzsparende Baugröße möglich ist.

An diesem Ausführungsbeispiel sind ebenfalls ein einfaches Ölmanagement, eine optimale Ausnutzung der Regalplätze sowie ein Frontzugang zur Maschine realisierbar. Das Ölmanagement kann eine Ölwanne umfassen, die am Regalbediengerät verschwenkbar angeordnet ist und mit diesem gemeinsam verfahrbar ist.

Es ist denkbar, dass für eine Einfädelbewegung des Fahrwagens in die Beladestation zumindest zwei Linearbewegungen und zumindest eine Rotationsbewegung von Nöten sind. Alternativ oder zusätzlich kann der Fahrwagen in eine Automationslösung die Einfädelbewegung ausführen. Als Automationslösung werden hierbei eine Werkzeugmaschine, ein Rüstplatz oder spezielle Automationslösungen wie beispielsweise Lackiermaschinen, Waschanlagen etc. verstanden. Der Begriff der Automationslösung ist hierbei nicht einschränkend zu verstehen. Beim Durchführen der Einfädelbewegung wird der Grundkörper mit Vertikalführung in die entsprechende Position verdreht. Anschließend wird das Regalbediengerät 1, 11 in linearer Richtung verfahren, sodass die exakte Position zum Einfädeln gegeben ist. Der so mögliche Ablauf der Einfädelbewegung hat den Vorteil einer wesentlich einfacheren Drehbewegung des Regalbediengeräts und damit einer einfacheren Programmierung bzw. Steuerung des Regalbediengeräts. Erst wenn die Drehbewegung sowie die lineare Bewegung durchgeführt wurden, wird mittels der teleskopartigen Führung eine Linearbewegung zum optimalen Be- bzw. Entladen des Regalsystems oder einer Automationslösung durchgeführt. Dabei ist es unerheblich in welche Ausrichtung das Regalbediengerät 1, 11 bzw. der Fahrwagen gedreht wird, da eine beidseitige bzw. allseitige Beladung bzw. Entladung mittels des Regalbediengeräts 1, 11 möglich ist. So ist eine Be- bzw. Entladung in alle Richtungen um das Regalbediengerät, insbesondere stirnseitig an der Bodenfahrschiene, möglich.

Es ist ferner denkbar, dass der Grundkörper mit Vertikalführung um 360° um die vertikale Achse drehbar und horizontal auf zumindest einer Bodenfahrschiene 5 verfahrbar ist. Eine Drehbewegung des Grundkörpers um die vertikale Achse ist dahingehend wichtig, damit eine optimale und exakte Einfädelbewegung des Regalbediengerätes 1, 11 realisiert werden kann. Das bietet den Vorteil, dass keine vordefinierte Ausrichtung und Belademöglichkeit definiert ist, da das Regalbediengerät 1, 11 je nach Anforderung gedreht und positioniert werden kann. Die horizontale Verfahrbarkeit des Grundkörpers ist für die Mobilität des Regalbediengerätes 1, 11 notwendig, da ein Verfahren innerhalb des gesamten Systems essentiell wichtig ist. Mittels eines Verfahrens auf einer Bodenfahrschiene 5 ist die Stabilität des Regalbediengerätes 1, 11 gewährleistet. Vorteilhaft ist hierbei, dass ein stabiles und dennoch sehr dynamisches Bediengerät geschaffen werden kann.

Es ist des Weiteren denkbar, dass zumindest zwei Linearführungen 3 auf beiden Seiten des Grundkörpers 2 mit Vertikalführung teleskopartig in Linearrichtung verfahrbar ist. Dies bietet den Vorteil, dass ein schneller Palettenwechsel bei geringer Baugrößenänderung realisierbar ist. Zudem weist das Regalbediengerät 1, 11 durch die außenliegende teleskopartige Linearführung 3 eine große Reichweite auf. Dadurch kann ein ausreichender Platz für einen Maschinenbediener zwischen beispielsweise einer vom Palettenspeichersystem beladenen Werkzeugmaschine und dem Palettenspeichersystem selbst freigehalten werden kann. Es ist somit möglich, während des Betriebs des Palettenspeichersystems eine beispielsweise beim Umrüsten einer Werkzeugmaschine auftretende Störung, Wartung etc. durchzuführen, ohne das gesamte System zu stoppen. Das hierfür notwendige Personal kann den ausreichenden Platz zwischen Maschine und Palettenspeichersystem für einen benötigten Zugang nutzen.

Es kann ferner vorgesehen sein, dass das Regalbediengerät als ein Einfachregalbediengerät oder Doppelregalbediengerät ausgebildet ist. Das Regalbediengerät 1, 11 dient zum Handhaben der Güter bzw. Transportgüter in dem Regalsystem 13 bzw. in entsprechend entlang der Bodenfahrschiene 5 angeordneten Werkzeugmaschinen oder sonstigen Geräten. Das Regalbediengerät 1, 11 weist bei einem Einfachregalbediengerät wie auch bei einem Doppelregalbediengerät mindestens zwei außenliegende Linearführungen 3 auf. Die außenliegende Linearführung 3 des Regalbediengeräts 1, 11 kann dabei an einer sich vertikal erstreckenden Säule 2 des Regalbediengeräts 1, 11 tangential bzw. entlang der Außenkontur der Säule 2 linear zum Be- und Entladen von Regalstellplätzen bzw. von Werkzeugmaschinen bewegt werden. Das bietet den Vorteil, dass durch die Anordnung der Linearführung 3 an der Außenseite des Regalbediengeräts 1, 11 es möglich ist von dem Regalbediengerät 1, 11 gegriffene Paletten bzw. Transportgüter sehr nahe an die vertikale Säule 2 heranzuführen, wodurch sich eine besonders geringe seitliche Erstreckung des Regalbediengeräts 1, 11 mit gegriffenem Transportgut ergibt. Dadurch kann die Bodenfahrschiene 5 zum Verfahren des Regalbediengeräts 1, 11 besonders nah an den Regalelementen des Regalsystems 13 verlegt werden, wodurch eine besonders platzsparende Anordnung des gesamten Palettenspeichersystems möglich ist.

Das Einfachregalbediengerät 1, 11 weist hierbei lediglich einen Fahrwagen zum Transportieren von Paletten bzw. Transportgütern auf. Ebenfalls kann das Doppelregalbediengerät derart ausgerichtet werden, dass der eine Fahrwagen sehr nahe an die vertikale Säule 2 herangeführt wird und die Bodenfahrschiene 5 lediglich um den Abstand des zweiten Fahrwagens entfernt sein muss. Dies bietet den Vorteil, dass ein schneller Palettenwechsel bei geringer Baugrößenänderung realisierbar ist. Ebenfalls ist ein Einsatz eines automatischen dynamischen Roboters möglich.

Es ist ferner denkbar, dass das Doppelregalbediengerät zwei Fahnnrägen zum Transportieren von Paletten bzw. Transportgütern aufweist. Dies bringt den Vorteil, dass eine sehr platzsparende Variante geschaffen werden kann, welche dabei eine optimale Be- und Entladung gewährleistet. Diese zwei Fahrwägen sind vorzugsweise in einem 90° Winkel angeordnet. Das bietet den Vorteil, dass durch das Regalbediengerät mindestens zwei Paletten bzw. Transportgüter transportiert werden können. Eine entsprechende angewinkelte Anordnung erleichtert dabei einen schnellen Palettenwechsel, bei dem zunächst eine Palette durch die erste Linearführung 3 aus dem Regalsystem 13 entnommen wird und eine andere, auf der zweiten Linearführung 3 bereitgestellte Palette in den freigewordenen Platz des Regalsystems 13 eingeschoben wird. Der Winkel von 90° ist hierbei jedoch nicht einschränkend zu verstehen. Ebenfalls ist ein von den 90° abweichender Winkel möglich.

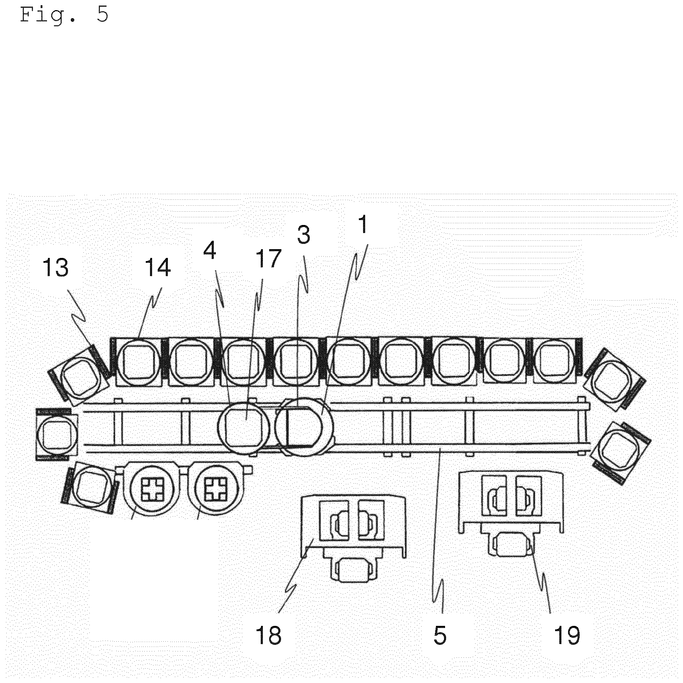

Figur 5 zeigt ein erfindungsgemäßes Palettenspeichersystem mit erfindungsgemäßem Regalbediengerät 1, welches als Einfachregalbediengerät 1 ausgebildet ist. Das Regalbediengerät 1 umfasst einen Fahrschlitten, welcher auf der Bodenführungsschiene 5 verfahrbar ist. Auf dem Fahrschlitten ist eine sich im Wesentlichen in vertikaler Richtung nach oben erstreckende Säule 2 angeordnet, an welcher die außenliegende teleskopartige Linearführung 3 vorgesehen ist. Die Linearführung 3 kann hierbei einen oder mehrere Teleskopzylinder umfassen, wobei der Begriff teleskopartig nicht einschränkend zu verstehen ist. Denkbar ist auch eine Ausführung als Schubkette oder als sonstiger Mechanismus, der ein teleskopartiges Funktionieren ermöglicht.

Mittels der Linearführungen 3 bzw. mittels dem entsprechenden Fahrwagen 4 können Werkstücke 17 bzw. Paletten mit darauf sich befindlichen Werkstücken 17 oder sonstigem Transportgut gegriffen bzw. gehoben werden und besonders platzsparend im Gefüge des Palettenspeichersystems gehandhabt werden. Hierzu kann der Fahrwagen 4 mit der Linearführung 3 gekoppelt sein, welche zum Bewegen des Transportguts ausgebildet ist. Die Linearführung 3 kann gemeinsam mit dem Fahrwagen 4 entlang der Säule 2 in vertikaler Richtung verfahren werden.

Durch die teleskopartig ausfahrbare Linearführung 3 bzw. den entsprechend mit ihr gekoppelten Fahrwagen 4 ist es möglich auch weiter von der Bodenführungsschiene 5 beabstandete Werkzeugmaschinen 18 zu bedienen bzw. mit Werkstücken zu versorgen. Das in Figur 5 gezeigte Regalsystem 13 umfasst Regalfächer 14, welche wie im linken und rechten Bereich der Bodenführungsschiene 5 gezeigt, um die jeweiligen Endbereiche der Bodenführungsschiene 5 beispielsweise kreisförmig angeordnet sein können, und dabei von dem Regalbediengerät 1 bedienbar sind. Allgemein können alle Komponenten des Palettenspeichersystems in den Endbereichen der Bodenfahrschiene 5 anordenbar und mittels des Regalbediengeräts 1, 11 bedienbar sein. Es ist auch denkbar, dass Komponenten wie die gezeigte Werkzeugmaschine 18 so weit von der Bodenfahrschiene 5 angeordnet werden können, dass zwischen der Bodenfahrschiene 5 und der jeweiligen Komponenten eine insbesondere bewegbare Absperrung vorgesehen werden kann, mittels der die Komponente von der Bodenfahrschiene 5 abtrennbar ist. Hierdurch ist es möglich, beispielsweise sichere Wartungs- oder Rüstarbeiten an der Komponente durchzuführen, ohne den Betrieb des restlichen Palettenspeichersystems zu beeinträchtigen.

### Bezugszeichenliste

1 Einfachregalbediengerät
2 Grundkörper, Säule
3 Außenliegende teleskopartige Linearführungen
4 Fahrwagen
5 Bodenfahrschiene
6 Linearbewegung
7 Drehbewegung
8 X-Richtung Verfahrbewegung
9 Horizontalbewegung
10 Einfädelmanöver des Regalbediengerätes in das Regalsystem
11 Doppelregalbediengerät
12 90° Versatz
13 Regalsystem
14 Regalfach
15 Erster Rüstplatz
16 Zweiter Rüstplatz
17 Werkstück
18 Erste Werkzeugmaschine
19 Zweite Werkzeugmaschine
20 Frontzugang der Maschine

## Patentansprüche

1. Regalbediengerät (1, 11) für ein Palettenspeichersystem mit wenigstens einem Regalsystem (13) und mit wenigstens einer Bodenfahrschiene (5) zum Verfahren des Regalbediengeräts (1, 11), wobei das Regalbediengerät (1, 11)
- einen Grundkörper (2),
- wenigstens eine außen an dem Grundkörper (2) angeordnete Linearführung (3),
- wenigstens eine an dem Grundkörper (2) zum Verfahren der Linearführung (3) in einer vertikalen Richtung (9) entlang des Grundkörpers (2) vorgesehene Vertikalführung, und
- wenigstens einen an der Linearführung (3) zum Aufnehmen, Entnehmen und/oder Halten von Transportgut vorgesehenen Fahrwagen (4)
umfasst, wobei der Grundkörper (2) um insbesondere 360° um die vertikale Achse drehbar angeordnet ist,
**dadurch gekennzeichnet,**
**dass** die Linearführung (3) teleskopartig gebildet und an dem Grundkörper (2) außenliegend über die Vertikalführung gekoppelt ist, sodass die Linearführung (3) am Grundkörper (2) tangential linear bewegbar ist.

2. Regalbediengerät (1, 11) nach Anspruch 1, **dadurch gekennzeichnet, dass** das Regalbediengerät (1, 11) genau eine außenliegende Linearführung (3) oder wenigstens zwei außenliegende Linearführungen (3) umfasst.

3. Regalbediengerät (1, 11) nach Anspruch 2, **dadurch gekennzeichnet, dass** zwei außenliegende Linearführungen insbesondere um 90° zueinander angewinkelt angeordnet sind und/oder dass zwei Fahrwagen zum Aufnehmen, Entnehmen und/oder Halten von Transportgut insbesondere um 90° zueinander angewinkelt angeordnet sind.

4. Regalbediengerät (1, 11) nach einem der vorhergehenden Ansprüche, **dadurch gekennzeichnet, dass** das Regalbediengerät (1, 11) eine insbesondere breitenverstellbare Palettenaufnahme zum Heben unterschiedlich breiter Paletten umfasst und/oder dass das Regalbediengerät (1, 11) ein Schnellwechselsystem, zum Ankuppeln zumindest einer weiteren Ausführung einer Palettenaufnahme umfasst.

5. Regalbediengerät (1, 11) nach einem der vorhergehenden Ansprüche, **dadurch gekennzeichnet, dass** das durch die Linearführung (3) an dem Au-ßenbereich eines Grundkörpers des Regalbediengeräts (1, 11) vom Regalbediengerät (1, 11) transportierte bzw. gehaltene Transportgut unmittelbar an dem Grundkörper bzw. unter minimalem Abstand von dem Grundkörper vom Regalbediengerät (1, 11) gehalten werden kann.

6. Regalbediengerät (1, 11) nach einem der vorhergehenden Ansprüche, **dadurch gekennzeichnet, dass** das Regalbediengerät (1, 11) auf einem Schlitten entlang der Bodenfahrschiene (5) verfahrbar ist und/oder in einer horizontalen Ebene und/oder in Richtung auf der Bodenfahrschiene verfahrbar ist.

7. Regalbediengerät (1, 11) nach einem der vorhergehenden Ansprüche, **dadurch gekennzeichnet, dass** an dem Regalbediengeräte eine Ölauffangwanne unterhalb mindestens einem der Fahrwagen schwenkbar und koppelbar angeordnet ist.

8. Regalbediengerät (1, 11) wenigstens nach Anspruch 7, **dadurch gekennzeichnet, dass** die Ölauffangwanne in einem unteren Bereich des Regalbediengeräts (1, 11) vorgesehen ist und/oder dass die Ölauffangwanne in wenigstens einer insbesondere horizontalen Richtung flexibel und/oder relativ zum Regalbediengerät (1, 11) verfahrbar, verformbar und/oder einfahrbar ist.

9. Regalbediengerät (1, 11) nach einem der vorhergehenden Ansprüche, **dadurch gekennzeichnet, dass** das Regalbediengerät über wenigstens ein Energiespeicher betreibbar ist und wobei der Energiespeicher bevorzugt auswechselbar ist, wobei das Regalbediengerät bevorzugt eine Wechselstation zum manuellen und/oder automatischen Auswechseln des Energiespeichers aufweist.

10. Palettenspeichersystem mit wenigstens einem Regalsystem (13), wenigstens einem Regalbediengerät (1, 11) nach einem der Ansprüche 1 bis 9 und wenigstens einer Bodenfahrschiene (5) zum Verfahren des Regalbediengeräts (1, 11).

11. Palettenspeichersystem nach Anspruch 10, **dadurch gekennzeichnet, dass** die wenigstens eine Bodenfahrschiene (5) aus insbesondere baugleichen, miteinander verbindbaren Modulen aufgebaut ist, und/oder dass das wenigstens eine Regalsystem (13) aus insbesondere baugleichen, miteinander verbindbaren Modulen aufgebaut ist.

12. Palettenspeichersystem nach Anspruch 10 oder 11, **dadurch gekennzeichnet, dass** der von dem Regalbediengerät (1, 11) erreichbare Bereich sowohl die Längsseiten als auch die Querseiten der Bodenfahrschiene (5) umfasst, wobei insbesondere an wenigstens einer Querseite der Bodenfahrschiene (5) Teile des Regalsystems (13) und/oder sonstige von dem Regalbediengerät (1, 11) zu erreichenden Komponenten angeordnet sind.

13. Palettenspeichersystem nach einem der Ansprüche 10 bis 12, **dadurch gekennzeichnet, dass** zwischen einem Bewegungsbereich des Regalbediengerätes (1, 11) und weiteren Komponenten des Palettenspeichersystem wie insbesondere Werkzeugmaschinen (18, 19) oder anderen Automationslösungen eine Absperrung zum sicheren Trennen des Bewegungsbereiches des Regalbediengerätes (1, 11) von den jeweiligen Komponente des Palettenspeichersystems vorsehbar ist, und/oder dass zwischen der Bodenfahrschiene (5) und wenigstens einer Komponente des Palettenspeichersystems ein Frontzugang (20) für Bedienpersonen vorgesehen ist.

14. Palettenspeichersystem nach einem der Ansprüche 10 bis 13, **dadurch gekennzeichnet, dass** das Regalsystem (13) wenigstens ein angetriebenes rotationssymmetrisches Regal umfasst, welches ein Übergabeplatz zu dem Regalbediengerät nach Anspruch 1-9 hin ausgerichtet ist.

## Claims

1. Storage and retrieval device (1, 11) for a pallet storage system having at least one racking system (13) and having at least one floor rail (5) for moving the storage and retrieval device (1, 11), wherein the storage and retrieval device (1, 11) comprises
- a base body (2),
- at least one linear guide (3) that is outwardly disposed on the base body (2),
- at least one vertical guide provided at the base body (2) for moving the linear guide (3) in a vertical direction (9) along the base body (2), and
- at least one carriage (4) provided on the linear guide (3) for receiving, removing and/or holding transported products,
wherein the base body (2) is rotatably arranged, in particular by 360°, about the vertical axis,
**characterized in that**
the linear guide (3) is formed in a telescopic manner and externally coupled to the base body (2) via the vertical guide, so that the linear guide (3) is tangentially-linearly movable on the base body (2).

2. Storage and retrieval device (1, 11) in accordance with claim 1, **characterized in that** the storage and retrieval device (1, 11) comprises exactly one outwardly disposed linear guide (3) or at least two outwardly disposed linear guides (3).

3. Storage and retrieval device (1, 11) in accordance with claim 2, **characterized in that** two outwardly disposed linear guides are in particular arranged angled by 90° with respect to one another; and/or **in that** two carriages for receiving, removing and/or holding transported products are in particular arranged angled by 90° with respect to one another.

4. Storage and retrieval device (1, 11) in accordance with one of the preceding claims, **characterized in that** the storage and retrieval device (1, 11) comprises a pallet receiver, in particular a pallet receiver adjustable in width, for lifting pallets of different widths; and/or **in that** the storage and retrieval device (1, 11) comprises a fast-change system for coupling at least one further design of a pallet receiver.

5. Storage and retrieval device (1, 11) in accordance with one of the preceding claims, **characterized in that** the transported products transported or held by the storage and retrieval device (1, 11) by the linear guide (3) at the outer region of a base body of the storage and retrieval device (1, 11) can be held directly at the base body or at a minimal spacing of the base body from the storage and retrieval device (1, 11).

6. Storage and retrieval device (1, 11) in accordance with one of the preceding claims, **characterized in that** the storage and retrieval device (1, 11) is movable on a carriage along the floor rail (5) and/or is movable in a horizontal plane and/or in the direction toward the floor rail.

7. Storage and retrieval device (1, 11) in accordance with one of the preceding claims, **characterized in that** an oil sump is pivotably and couplably arranged beneath at least one of the carriages at the storage and retrieval device.

8. Storage and retrieval device (1, 11) at least in accordance with claim 7, **characterized in that** the oil sump is provided in a lower region of the storage and retrieval device (1, 11); and/or **in that** the oil sump is movable, deformable and/or insertable flexibly and/or relative to the storage and retrieval device (1, 11) in at least one direction, in particular a horizontal direction.

9. Storage and retrieval device (1, 11) in accordance with one of the preceding claims, **characterized in that** the storage and retrieval device is operable via at least one energy store and wherein the energy store is preferably replaceable, wherein the storage and retrieval device preferably comprises a replacement station for a manual and/or automatic replacement of the energy store.

10. Pallet storage system having at least one racking system (13), at least one storage and retrieval device (1, 11) in accordance with one of the claims 1 to 9, and at least one floor rail (5) for moving the storage and retrieval device (1, 11).

11. Pallet storage system in accordance with claim 10, **characterized in that** the at least one floor rail (5) is composed of modules, in particular of the same design, that can be connected to one another; and/or **in that** the at least one racking system (13) is composed of modules, in particular of the same design, that can be connected to one another.

12. Pallet storage system in accordance with claim 10 or claim 11, **characterized in that** the region reachable by the storage and retrieval device (1, 11) comprises both the longitudinal sides and the transverse sides of the floor rail (5), with parts of the racking system (13) and/or other components to be reached by the storage and retrieval device (1, 11) in particular being arranged at at least one transverse side of the floor rail (5).

13. Pallet storage system in accordance with one of the claims 10 to 12, **characterized in that** a barrier is providable between a movement region of the storage and retrieval device (1, 11) and further components of the pallet storage system such as in particular machine tools (18, 19) or other automation solutions for a reliable separation of the movement region of the storage and retrieval device (1, 11) from the respective components of the pallet storage system; and/or **in that** frontal access (20) for operators is provided between the floor rail (5) and at least one component of the pallet storage system.

14. Pallet storage system in accordance with one of the claims 10 to 13, **characterized in that** the racking system (13) comprises at least one driven rotationally symmetrical rack that is a transfer station that is oriented toward the storage and retrieval device in accordance with claims 1 to 9.

## Revendications

1. Appareil d'utilisation de rayonnages (1, 11) pour un système de stockage de palettes avec au moins un système de rayonnages (13) et avec au moins un rail de déplacement au sol (5) pour déplacer l'appareil d'utilisation de rayonnage (1, 11), dans lequel l'appareil d'utilisation de rayonnages (1, 11) comprend
- un corps de base (2),
- au moins un guidage linéaire (3) disposé à l'extérieur sur le corps de base (2),
- au moins un guidage vertical prévu sur le corps de base (2) pour déplacer le guidage linéaire (3) dans une direction verticale (9) le long du corps de base (2), et
- au moins un chariot de déplacement (4) prévu sur le guidage linéaire (3) pour recevoir, prélever et/ou maintenir des produits de transport, dans lequel le corps de base (2) est disposé de manière à pouvoir tourner autour de l'axe vertical de 360° en particulier,
**caractérisé en ce que**
le guidage linéaire (3) est formé de manière télescopique et est couplé au corps de base (2) tout en se situant à l'extérieur par l'intermédiaire du guidage vertical si bien que le guidage linéaire (3) peut être déplacé linéairement de manière tangentielle sur le corps de base (2).

2. Appareil d'utilisation de rayonnages (1, 11) selon la revendication 1, **caractérisé en ce que** l'appareil d'utilisation de rayonnages (1, 11) comprend précisément un guidage linéaire (3) situé à l'extérieur ou au moins deux guidages linéaires (3) situés à l'extérieur.

3. Appareil d'utilisation de rayonnages (1, 11) selon la revendication 2, **caractérisé en ce que** deux guidages linéaires situés à l'extérieur sont disposés de manière adjacente l'un par rapport à l'autre en particulier selon un angle de 90°, et/ou que deux chariots de déplacement permettant de recevoir, de prélever et/ou de maintenir des produits de transport sont disposés de manière adjacente en particulier selon un angle de 90° l'un par rapport à l'autre.

4. Appareil d'utilisation de rayonnages (1, 11) selon l'une quelconque des revendications précédentes, **caractérisé en ce que** l'appareil d'utilisation de rayonnages (1, 11) comprend un logement de palettes en particulier ajustable en largeur permettant de lever des palettes de largeurs différentes, et/ou que l'appareil d'utilisation de rayonnages (1, 11) comprend un système de changement rapide pour accoupler au moins une autre réalisation d'un logement de palettes.

5. Appareil d'utilisation de rayonnages (1, 11) selon l'une quelconque des revendications précédentes, **caractérisé en ce que** le produit de transport transporté ou maintenu par l'appareil d'utilisation de rayonnages (1, 11) par le guidage linéaire (3) sur la zone extérieure d'un corps de base de l'appareil d'utilisation de rayonnages (1, 11) peut être maintenu par l'appareil d'utilisation de rayonnages (1, 11) directement sur le corps de base ou à une distance minimale du corps de base.

6. Appareil d'utilisation de rayonnages (1, 11) selon l'une quelconque des revendications précédentes, **caractérisé en ce que** l'appareil d'utilisation de rayonnages (1, 11) peut être déplacé sur une glissière le long du rail de déplacement au sol (5) et/ou peut être déplacé dans un plan horizontal et/ou en direction du rail de déplacement au sol.

7. Appareil d'utilisation de rayonnages (1, 11) selon l'une quelconque des revendications précédentes, **caractérisé en ce qu'**une cuve de collecte d'huile est disposée de manière à pouvoir être pivotée et couplée sous au moins un des chariots mobiles sur les appareils d'utilisation de rayonnages.

8. Appareil d'utilisation de rayonnages (1, 11) selon au moins la revendication 7, **caractérisé en ce que** la cuve de collecte d'huile est prévue dans une zone inférieure de l'appareil d'utilisation de rayonnages (1, 11), et/ou que la cuve de collecte d'huile peut être déplacée, déformée et/ou rentrée de manière flexible dans au moins une direction en particulier horizontale et/ou par rapport à l'appareil d'utilisation de rayonnages (1, 11).

9. Appareil d'utilisation de rayonnages (1, 11) selon l'une quelconque des revendications précédentes, **caractérisé en ce que** l'appareil d'utilisation de rayonnages peut fonctionner par l'intermédiaire d'au moins un accumulateur d'énergie et dans lequel l'accumulateur d'énergie peut être de manière préférée remplacé, dans lequel l'appareil d'utilisation de rayonnages présente de manière préférée une station de changement pour remplacer manuellement et/ou automatiquement l'accumulateur d'énergie.

10. Système de stockage de palettes avec au moins un système de rayonnages (13), au moins un appareil d'utilisation de rayonnages (1, 11) selon l'une quelconque des revendications 1 à 9 et au moins un rail de déplacement au sol (5) pour déplacer l'appareil d'utilisation de rayonnages (1, 11).

11. Système de stockage de palettes selon la revendication 10, **caractérisé en ce que** l'au moins un rail de déplacement au sol (5) est élaboré à partir de modules présentant en particulier une structure identique, pouvant être reliés les uns aux autres, et/ou que l'au moins un système de rayonnages (13) est élaboré à partir de modules présentant en particulier une structure identique, pouvant être reliés les uns aux autres.

12. Système de stockage de palettes selon la revendication 10 ou 11, **caractérisé en ce que** la zone pouvant être atteinte par l'appareil d'utilisation de rayonnages (1, 11) comprend à la fois les côtés longitudinaux et les côtés transversaux du rail de déplacement au sol (5), dans lequel des parties du système de rayonnages (13) et/ou certains composants devant être atteints par l'appareil d'utilisation de rayonnages (1, 11) sont disposés en particulier sur au moins un côté transversal du rail de déplacement au sol (5).

13. Système de stockage de palettes selon l'une quelconque des revendications 10 à 12, **caractérisé en ce qu'**une barrière pour séparer en toute sécurité la zone de déplacement de l'appareil d'utilisation de rayonnages (1, 11) du composant respectif du système de stockage de palettes peut être prévue entre une zone de déplacement de l'appareil d'utilisation de rayonnages (1, 11) et d'autres composants du système de stockage de palettes et en particulier de machines-outils (18, 19) ou d'autres solutions d'automatisation, et/ou qu'un accès frontal (20) pour des utilisateurs est prévu entre le rail de déplacement au sol (5) et au moins un composant du système de stockage de palettes.

14. Système de stockage de palettes selon l'une quelconque des revendications 10 à 13, **caractérisé en ce que** le système de rayonnages (13) comprend au moins un rayonnage symétrique en rotation entraîné, lequel présente un emplacement de transfert qui est orienté vers l'appareil d'utilisation de rayonnages selon la revendication 1 - 9.
